# EUROPEAN PATENT APPLICATION

(11) **EP 2 677 150 A2**
(43) Date of publication of application: **25.12.2013**
(21) Application number: 13170078.3
(22) Date of filing: 31.05.2013
(51) Int. Cl.: F02D 41/12, F01N 3/20, F02D 21/10, F02D 41/00

(54) **Exhaust gas control apparatus of internal combustion engine**

(30) Priority: 21.06.2012 JP 2012139992
(71) Applicant: TOYOTA JIDOSHA KABUSHIKI KAISHA, Toyota-shi, Aichi-ken, 471-8571 (JP)
(72) Inventor: Ota, Hirohiko, Aichi-ken,, 471-8571 (JP)
(74) Representative: Kuhnen & Wacker

(57) **Abstract**

An engine (1) is provided with a urea aqueous solution supply mechanism (200) that adds a urea aqueous solution into an exhaust passage (26), an SCR catalyst (41) that adsorbs the urea aqueous solution added from the urea aqueous supply mechanism (200), and a turbocharger (11) having a nozzle vane (11v). A control apparatus (80) increases an exhaust gas flow rate by changing an opening amount of the nozzle vane (11v) to a minimum opening amount when adding the urea aqueous solution when the engine (1) is decelerating.

## Description

### BACKGROUND OF THE INVENTION

### 1. Field of the Invention

The invention relates to an exhaust gas control apparatus of an internal combustion engine.

### 2. Description of Related Art

An exhaust gas control apparatus of an internal combustion engine, which includes a purifying catalyst that purifies oxides of nitrogen (NOx) in exhaust gas, is known. This kind of exhaust gas control apparatus is provided with an adding mechanism that adds a reducing agent such as urea aqueous solution, for example. When reducing agent that is added from the adding mechanism reaches the purifying catalyst, it is adsorbed to the purifying catalyst as ammonia. NOx is then reduced and purified by this ammonia that has been adsorbed to the purifying catalyst.

The amount of ammonia adsorbed to the purifying catalyst tends to be larger when the temperature of the purifying catalyst is lower. Therefore, with the apparatus described in Japanese Patent Application Publication No. 2001-303934 (JP 2001-303934 A), for example, ammonia is made to be sufficiently adsorbed to the purifying catalyst by adding the reducing agent when the engine is decelerating, at which time the temperature of the purifying catalyst is lower.

However, when decelerating, the flow rate of exhaust gas is slow. Therefore, the reducing agent may not sufficiently reach an exhaust gas downstream-side region (i.e., a region downstream with respect to the flow of exhaust gas) in the purifying catalyst, so ammonia may not be able to be sufficiently adsorbed in this exhaust gas downstream-side region.

### SUMMARY OF THE INVENTION

In view of the foregoing problem, the invention provides an exhaust gas control apparatus of an internal combustion engine, capable of sufficiently adsorbing ammonia even in an exhaust gas downstream region in a purifying catalyst.

One aspect of the invention relates to an exhaust gas control apparatus of an internal combustion engine that includes an adding mechanism that adds a reducing agent into an exhaust passage, and a purifying catalyst that adsorbs the reducing agent added from the adding mechanism. With this exhaust gas control apparatus, an increasing process that increases an exhaust gas flow rate is performed when the adding mechanism adds the reducing agent into the exhaust passage and the internal combustion engine is decelerating.

According to this structure, the exhaust gas flow rate is increased when the reducing agent is added when the internal combustion engine is decelerating, so the added reducing agent more easily reaches an exhaust gas downstream-side region in the purifying catalyst. Therefore, ammonia is able to be sufficiently adsorbed in the exhaust gas downstream-side region in the purifying catalyst as well, so exhaust gas purifying performance and the like, for example, also improves.

In the exhaust gas control apparatus described above, when the internal combustion engine is decelerating may be when an engine operating state is one in which an accelerator operating means is not being operated.

According to the structure described above, the reducing agent is added when the engine operating state in one in which an accelerator operating means such as an accelerator pedal is not being operated, i.e., when an air-fuel mixture is not being combusted in a combustion chamber of the internal combustion engine and the temperature in the exhaust passage is lower than it is when the air-fuel mixture is being combusted. Therefore, the amount of ammonia that is adsorbed to the purifying catalyst is able to be increased compared with when the reducing agent is added when there is some air-fuel mixture being combusted when the internal combustion engine is decelerating. Here, when combustion is not occurring in the combustion chamber, the exhaust gas flow rate is less than it is when the combustion is occurring. However, with this structure, the increasing process described above is performed, so a decrease in the exhaust gas flow rate is able to be inhibited. Therefore, according to the structure described above, the amount of ammonia that is adsorbed is able to be suitably increased, and ammonia is also able to be sufficiently adsorbed in the exhaust gas downstream-side region in the purifying catalyst.

In the exhaust gas control apparatus described above, a variable capacity supercharger that includes a nozzle vane may be provided in the exhaust passage, and the increasing process may be performed by decrease-correcting an opening amount of the nozzle vane.

According to the structure described above, the opening amount of the nozzle vane is decrease-corrected. As a result, the flow velocity of exhaust gas that strikes an exhaust gas-side turbine of the supercharger increases, and consequently, the rotation speed of the exhaust gas-side turbine increases. When the rotation speed of the exhaust gas-side turbine increases, the rotation speed of an intake-side compressor of the supercharger also increases, so the amount of fresh air that is introduced into the combustion chamber increases, and as a result, the exhaust gas flow rate inside the exhaust passage increases.

In the exhaust gas control apparatus described above, a throttle valve that regulates an intake air amount may be provided in an intake passage of the internal combustion engine, and the increasing process may be performed by increase-correcting an opening amount of the throttle valve.

According to the structure described above, the opening amount of the throttle valve provided in the intake passage is increase-corrected. As a result, the amount of fresh air that is introduced into the combustion chamber increases, and consequently, the exhaust gas flow rate inside the exhaust gas passage increases.

In the exhaust gas control apparatus described above, an amount of the reducing agent that is added when the increasing process is executed may be reduced when the exhaust gas flow rate is larger.

If a large amount of reducing agent is added when the exhaust gas flow rate is large, ammonia slip in which ammonia that is unable to be adsorbed to the purifying catalyst flows out of the purifying catalyst tends to occur. Therefore, with this structure, the amount of reducing agent that is added is reduced when the exhaust gas flow rate is larger. Therefore, ammonia slip is able to be inhibited from occurring when the exhaust gas flow rate increasing process is performed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 view schematically showing an exhaust gas control apparatus of an internal combustion engine according to one example embodiment of the invention, an internal combustion engine to which this exhaust gas control apparatus is applied, and the surrounding structure;
FIG. 2 is a flowchart illustrating the flow of an ammonia adsorbing process according to the example embodiment;
FIG. 3 is a graph showing the relationship between the exhaust gas flow rate and a urea addition amount; and
FIG. 4 is a graph showing the relationship between an opening amount of an intake throttle valve and the exhaust gas flow rate.

### DETAILED DESCRIPTION OF EMBODIMENTS

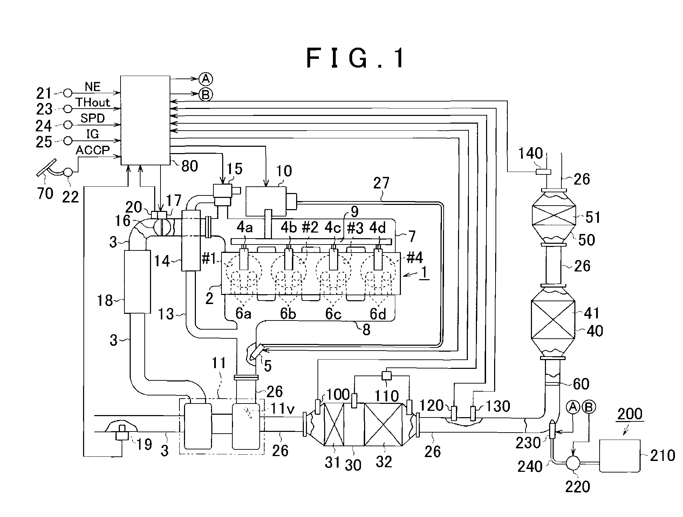

Hereinafter, an exhaust gas control apparatus of an internal combustion engine according to one example embodiment will be described in detail with reference to FIGS. 1 to 3. The terms "upstream" and "downstream" in this specification are based on the direction in which exhaust gas flows in the exhaust system.

FIG. 1 is a block diagram schematically showing a diesel engine (hereinafter, simply referred to as "engine") to which the exhaust gas control apparatus of the example embodiment is applied, and the surrounding structure. A plurality of cylinders #1 to #4 are provided in the engine 1. A plurality of fuel injection valves 4a to 4d are mounted to a cylinder head 2. These fuel injection valves 4a to 4d inject fuel into combustion chambers of the cylinders #1 to #4. Also, an intake port for introducing fresh air into the cylinders and an exhaust port 6a to 6d for discharging combustion gas out of the cylinder are provided corresponding to each of the cylinders #1 to #4.

The fuel injection valves 4a to 4d are connected to a common rail 9 that accumulates high-pressure fuel. This common rail 9 is connected to a supply pump 10. The supply pump 10 draws in fuel from within a fuel tank and supplies high-pressure fuel to the common rail 9. The high-pressure fuel supplied to the common rail 9 is injected into the cylinders from the fuel injection valves 4a to 4d when the fuel injection valves 4a to 4d open.

An intake manifold 7 is connected to the intake ports. The intake manifold 7 is connected to an intake passage 3. An intake throttle valve 16 for regulating the intake air amount is provided inside of this intake passage 3.

An exhaust manifold 8 is connected to the exhaust ports 6a to 6d. This exhaust manifold 8 is connected to an exhaust passage 26. A variable capacity turbocharger 11 that supercharges the intake air introduced into the cylinders using exhaust pressure is provided midway in this exhaust passage 26. A nozzle vane 11v that regulates the exhaust gas flow rate is provided on an inlet port side of an exhaust gas-side turbine of the turbocharger 11, in the turbocharger 11. The opening amount of this nozzle vane 11v is changed according to the operating state of the engine. For example, in a low load region, the exhaust gas flow rate can be increased such that the dynamic pressure of the exhaust gas increases even if the exhaust gas flow rate is low, by reducing the opening amount of the nozzle vane 11v. Also, in a high load region, exhaust gas pressure loss when the exhaust gas flow rate is high can be reduced by increasing the opening amount of the nozzle vane 11v.

An intercooler 18 is provided in the intake passage 3 between the intake throttle valve 16 and an intake-side compressor of the turbocharger 11. This intercooler 18 makes it possible to cool the intake air that has risen in temperature due to being supercharged by the turbocharger 11.

Also, a first purifying member 30 that purifies exhaust gas is provided downstream of the exhaust gas-side turbine of the turbocharger 11, midway in the exhaust passage 26. An oxidation catalyst 31 and a DPF catalyst 32 are arranged in series in the exhaust gas flow direction, inside of this first purifying member 30.

A catalyst that oxidizes HC in the exhaust gas is carried on the oxidation catalyst 31. Also, the DPF catalyst 32 is a filter that captures PM (particulate matter) in the exhaust gas, and is made of porous ceramic. Further, a catalyst for promoting the oxidation of PM is carried on the DPF catalyst 32. PM in the exhaust gas is captured when it passes through a porous wall of the DPF catalyst 32. This DPF catalyst 32 forms the exhaust gas purifying member described above.

Also, a fuel adding valve 5 for supplying fuel as an additive to the oxidation catalyst 31 and the DPF catalyst 32 is provided near a converging portion of the exhaust manifold 8. This fuel adding valve 5 is connected to the supply pump 10 via a fuel supply line 27. The position where the fuel adding valve 5 is arranged may be changed as appropriate as long as it is upstream of the first purifying member 30 in the exhaust system.

If the amount of PM captured by the DPF catalyst 32 exceeds a predetermined value, a process for regenerating the DPF catalyst 32 is started, and fuel is injected from the fuel adding valve 5 toward the inside of the exhaust manifold 8. This fuel that is injected from the fuel adding valve 5 combusts when it reaches the oxidation catalyst 31, and as a result, the exhaust gas temperature increases. Also, when exhaust gas that has increased in temperature in the oxidation catalyst 31 flows into the DPF catalyst 32, the temperature of the DPF catalyst 32 consequently increases. As a result, PM that has accumulated on the DPF catalyst 32 oxidizes, thereby regenerating the DPF catalyst 32.

Also, a second purifying member 40 that purifies exhaust gas is provided downstream of the first purifying member 30, midway in the exhaust passage 26. A selective reduction NOx catalyst (hereinafter, referred to as a "SCR catalyst") 41 that serves as a purifying catalyst that reduces and purifies NOx in the exhaust gas by a reducing agent being added, is arranged in the second purifying member 40.

Moreover, a third purifying member 50 that purifies exhaust gas is provided downstream of the second purifying member 40, midway in the exhaust passage 26. An ammonia oxidation catalyst 51 that purifies ammonia in the exhaust gas is arranged of inside the third purifying member 50.

The engine 1 is provided with a urea aqueous solution supply mechanism 200 that serves as the adding mechanism that adds the reducing agent into the exhaust passage 26. This urea aqueous solution supply mechanism 200 includes a tank 210 that stores urea aqueous solution, a urea adding valve 230 that injects, i.e., supplies, the urea aqueous solution into the exhaust passage 26, a supply passage 240 that connects the urea adding valve 230 to the tank 210, and a pump 220 provided midway in the supply passage 240.

The urea adding valve 230 is provided in the exhaust passage 26 between the first purifying member 30 and the second purifying member 40. An injection hole of the urea adding valve 230 opens toward the SCR catalyst 41. When this urea adding valve 230 opens, the urea aqueous solution is injected, i.e., supplied, into the exhaust passage 26 via the supply passage 240.

When the urea aqueous solution injected from the urea adding valve 230 reaches the SCR catalyst 41, it is adsorbed as ammonia. NOx is reduced and purified by this ammonia adsorbed to the SCR catalyst 41.

The pump 220 is an electric pump that pumps urea aqueous solution from the tank 210 to the urea adding valve 230 when driven in the forward direction. On the other hand, when driven in reverse, the pump 220 pumps urea aqueous solution from the urea adding valve 230 to the tank 210. That is, when the pump 220 is driven is reverse, urea aqueous solution is recovered from the urea adding valve 230 and the supply passage 240, and returned to the tank 210.

Also, a dispersion plate 60 that promotes atomization of the urea aqueous solution by dispersing the urea aqueous solution injected from the urea adding valve 230 is provided in the exhaust passage 26 between the urea adding valve 230 and the SCR catalyst 41.

In addition, the engine 1 also includes an exhaust gas recirculation apparatus (hereinafter, referred to as an "EGR apparatus"). This EGR apparatus is an apparatus that reduces the amount of NOx that is generated by reducing the combustion temperature inside the cylinders by introducing some of the exhaust gas into the intake air. This exhaust gas recirculation apparatus includes an EGR passage 13 that communicates the intake passage 3 with the exhaust manifold 8, an EGR valve 15 provided in the EGR passage 13, and an EGR cooler 14, and the like. The amount of circulated exhaust gas that is introduced from the exhaust passage 26 into the intake passage 3, i.e., the so-called external EGR amount, is metered by adjusting the opening amount of the EGR valve 15. Also, the temperature of the exhaust gas that flows through the EGR passage 13 is lowered by the EGR cooler 14.

Various sensors for detecting the engine operating state are mounted to the engine 1. For example, an airflow meter 19 detects an intake air amount GA in the intake passage 3. A throttle valve opening amount sensor 20 detects an opening amount of the intake throttle valve 16. An engine speed sensor 21 detects a rotation speed of a crankshaft, i.e., an engine speed NE. An accelerator operation amount sensor 22 detects a depression amount of an accelerator pedal (an accelerator operating means) 70, i.e., an accelerator operation amount ACCP. An outside air temperature sensor 23 detects an outside air temperature THout. A vehicle speed sensor 24 detects a vehicle speed SPD of a vehicle provided with the engine 1. An ignition switch 25 detects a start operation and a stop operation of the engine 1 by a driver of the vehicle.

Also, a first exhaust gas temperature sensor 100 provided upstream of the oxidation catalyst 31 detects a first exhaust gas temperature TH1 that is an exhaust gas temperature before the exhaust gas flows into the oxidation catalyst 31. A differential pressure sensor 110 detects a pressure difference ΔP between the exhaust gas pressure upstream of the DPF catalyst 32 and the exhaust gas pressure downstream of the DPF catalyst 32.

A second exhaust gas temperature sensor 120 and a first NOx sensor 130 are provided upstream of the urea adding valve 230, in the exhaust passage 26 between the first purifying member 30 and the second purifying member 40. The second exhaust gas temperature sensor 120 detects a second exhaust gas temperature TH2 that is an exhaust gas temperature before the exhaust gas flows into the SCR catalyst 41. The first NOx sensor 130 detects a first NOx concentration N1 that is the concentration of NOx in the exhaust gas before the exhaust gas flows into the SCR catalyst 41.

A second NOx sensor 140 that detects a second NOx concentration N2 that is the concentration of NOx in the exhaust gas that has been purified by the SCR catalyst 41 is provided in the exhaust passage 26 farther downstream than the third purifying member 50.

Outputs from these various sensors and the like are input to a control apparatus 80. This control apparatus 80 is formed mainly by a microcomputer that includes a central processing control unit (CPU), read-only memory (ROM) in which various programs and maps and the like are stored beforehand, random-access memory (RAM) that temporarily stores calculation results of the CPU, a timer counter, an input interface, and an output interface, and the like.

Various controls of the engine 1, such as fuel injection quantity control and fuel injection timing control of the fuel injection valves 4a to 4d and the fuel adding valve 5, discharge pressure control of the supply pump 10, driving amount control of an actuator 17 that opens and closes the intake throttle valve 16, opening amount control of the EGR valve 15, and opening amount control of the nozzle vane 11v, are performed by the control apparatus 80.

Also, various exhaust gas purifying controls such as the regeneration process described above that combusts PM captured by the DPF catalyst 32 and the like are also performed by the control apparatus 80. The control apparatus 80 also performs adding control of the urea aqueous solution by the urea adding valve 230 as one of these exhaust gas purifying controls. In this adding control, a urea addition amount QE required to reduce the NOx discharged from the engine 1 is calculated based on the engine operating state and the like, and the opening state of the urea adding valve 230 is controlled such that this calculated urea addition amount QE is injected from the urea adding valve 230.

As described above, in the SCR catalyst 41, NOx is purified using the adsorbed ammonia and the like. Therefore, a certain amount of ammonia must be adsorbed to the SCR catalyst 41. The ammonia adsorption amount of the SCR catalyst 41 is larger when the temperature of the SCR catalyst 41 is lower. Therefore, in this example embodiment, when the engine 1 is decelerating, i.e., when the temperature in the exhaust passage 26 is lower than when an air-fuel mixture is being combusted, the urea aqueous solution is added and ammonia is adsorbed to the SCR catalyst 41.

Here, the exhaust gas flow rate decreases when decelerating, so the urea aqueous solution may not sufficiently reach an exhaust gas downstream region (i.e., a region that is downstream with respect to the flow of exhaust gas) inside the SCR catalyst 41, so ammonia may not be able to be sufficiently adsorbed to this exhaust gas downstream region. Also, when the exhaust gas flow rate decreases and the urea aqueous solution is unable to sufficiently reach the exhaust gas downstream region in the SCR catalyst 41, the added urea aqueous solution tends to accumulate near a front end portion of the SCR catalyst 41. If the urea aqueous solution accumulates near the front end portion of the SCR catalyst 41 in this way, the accumulated urea aqueous solution may slip through the SCR catalyst 41, i.e., so-called ammonia slip may occur, when the exhaust gas flow rate increases thereafter (such as when the vehicle provided with the engine 1 accelerates or the like). Therefore, in this example embodiment, an increasing process for increasing the exhaust gas flow rate to match the addition of urea when decelerating is performed.

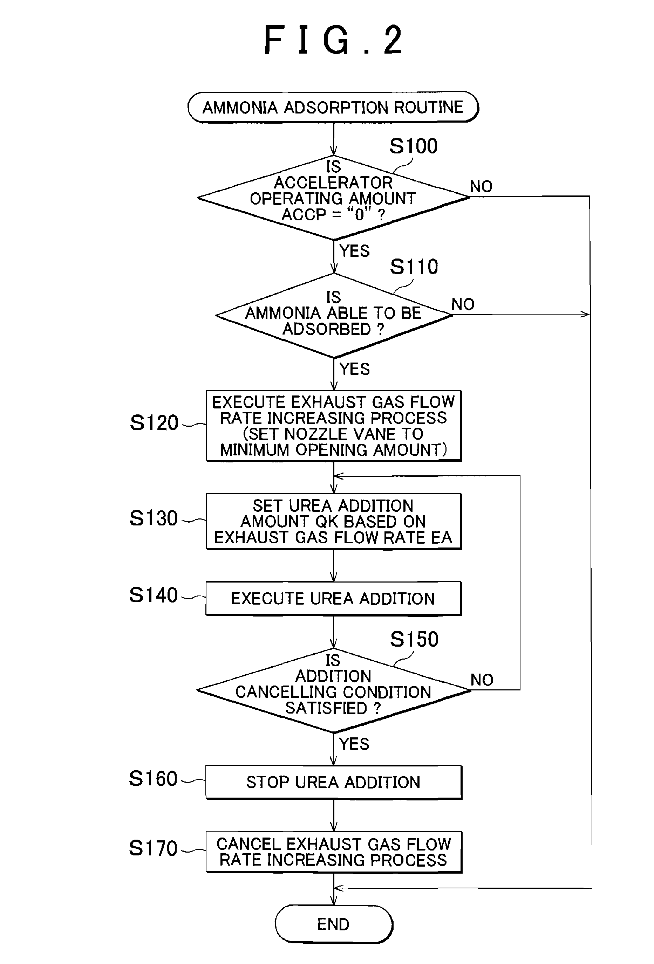

Hereinafter, an ammonia adsorbing routine of this example embodiment will be described with reference to FIG. 2. This routine is repeatedly executed at predetermined cycles by the control apparatus 80. When this routine starts, first it is determined whether the accelerator operation amount ACCP is "0", i.e., whether the engine operating state is one in which the accelerator pedal 70 is not being operated (S100). If the accelerator operation amount ACCP is not "0" (i.e., NO in step S100), it is determined that the operating state in one in which some air-fuel mixture is being combusted, and this cycle of the routine ends.

On the other hand, if the accelerator operation amount ACCP is "0" (i.e., YES in step S100), it is determined that the engine 1 is decelerating, at which time the air-fuel mixture is not being combusted, so then it is determined whether ammonia is able to be adsorbed (S110).

In step S110, the determination of whether the temperature of the SCR catalyst 41 is a temperature suitable for the adsorption of ammonia is made based on the second exhaust gas temperature TH2, for example. If ammonia is unable to be adsorbed (i.e., NO in step S110), this cycle of the routine ends. If it is able to be determined that ammonia is sufficiently adsorbed and any more adsorption is unnecessary, the determination in step S110 may be "NO".

On the other hand, if ammonia is able to be adsorbed (i.e., YES in step S110), the increasing process for increasing the exhaust gas flow rate is executed (S120). In this increasing process, the opening amount of the nozzle vane 11v is decrease-corrected from the opening amount that is variably set according to the engine load and the like. More specifically, the variable setting of the opening amount according to the engine load and the like is cancelled, and opening amount control of the nozzle vane 11v is performed such that the opening amount of the nozzle vane 11v becomes the minimum opening amount.

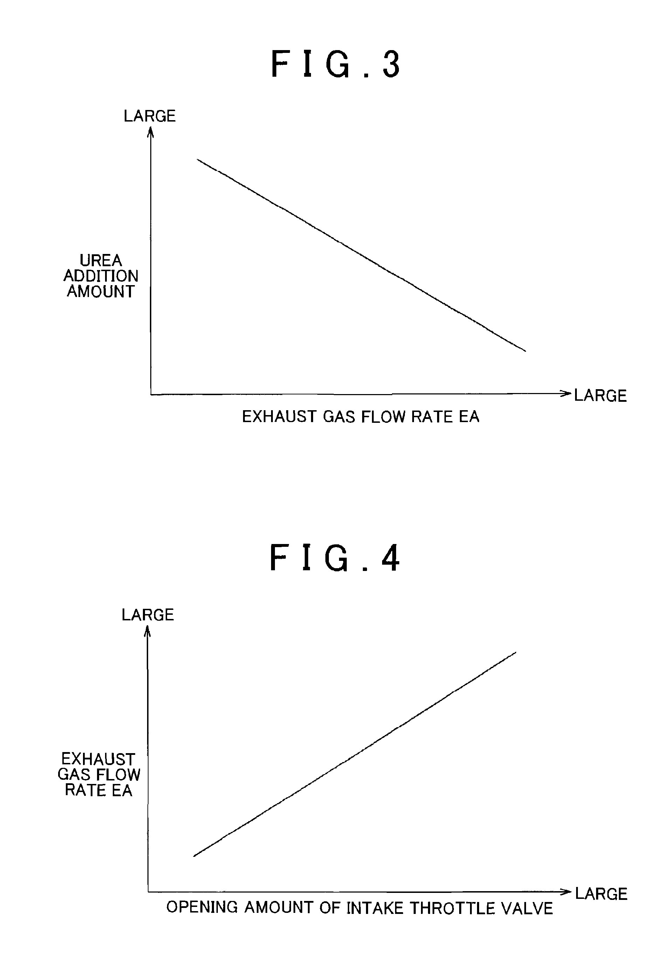

Next, a urea addition amount QK for ammonia adsorption is set based on an exhaust gas flow rate EA when the nozzle vane 11v is at the minimum opening amount (S130). This urea addition amount QK is decreased when the exhaust gas flow rate EA is larger, as shown in FIG. 3. The exhaust gas flow rate EA may be ascertained by a suitable method. For example, the exhaust gas flow rate EA may be estimated based on the intake air amount GA detected by the airflow meter 19 and the engine speed NE and the like, or a sensor or the like may be provided and the exhaust gas flow rate EA may be actually measured.

Next, the urea addition is performed according to the set urea addition amount QK (S140). Then it is determined whether a urea aqueous solution addition cancelling condition is satisfied (S150). Some examples of this addition cancelling condition are a condition that the ammonia adsorption amount have reached a target value, a condition that an exhaust gas temperature have changed to a temperature in a range unsuitable for ammonia adsorption, and a condition that combustion of the air-fuel mixture have started again.

Also, if the addition cancelling condition is not satisfied (i.e., NO in step S150), the steps from step S130 to step S150 are performed until this addition cancelling condition is satisfied. On the other hand, if the addition cancelling condition is satisfied (i.e., YES in step S150), urea according to the urea addition amount QK set in step S130 stops being added (S160), and then the exhaust gas flow rate increasing process is cancelled (S170). That is, the process for decrease-correcting the opening amount of the nozzle vane 11v is cancelled, and the opening amount of the nozzle vane 11v is changed from the minimum opening amount to the opening amount according to the engine load and the like. Then this cycle of the routine ends.

Next, operation of the adsorption routine will be described. When adding the urea aqueous solution when the engine 1 is decelerating, the exhaust gas flow rate EA is increased by the process in step S120. Therefore, the added urea aqueous solution will more easily reach the exhaust gas downstream-side region in the SCR catalyst 41. Accordingly, ammonia is able to be sufficiently adsorbed not only in the exhaust gas downstream-side region in the SCR catalyst 41, but also in the exhaust gas downstream-side region, so the exhaust gas purifying performance and the like, for example, also improves. Further, because the urea aqueous solution more easily reaches the exhaust gas downstream-side region in the SCR catalyst 41, the amount of urea aqueous solution that accumulates near the front end portion of the SCR catalyst 41 decreases. Therefore, ammonia slip that may occur due to urea aqueous solution that has accumulated near the front end portion of the SCR catalyst 41 slipping by the SCR catalyst 41 is inhibited.

Also, the urea addition is performed when decelerating, but more particularly, the urea aqueous solution is added when the engine operating state in one in which the accelerator pedal 70 is not being operated, i.e., when the air-fuel mixture is not being combusted in the combustion chamber of the engine 1 and the temperature in the exhaust passage 26 is lower than it is when the air-fuel mixture is being combusted. Therefore, the amount of ammonia that is adsorbed to the SCR catalyst 41 is able to be increased compared with when the urea aqueous solution is added when there is some air-fuel mixture being combusted when decelerating. Here, there is a trade-off in that, when combustion is not occurring in the combustion chamber of the engine 1, the exhaust gas flow rate is less than it is when the air-fuel mixture is being combusted. However, in the adsorption routine described above, the exhaust gas flow rate increasing routine is increased as described above, so a decrease in the exhaust gas flow rate is inhibited. Therefore, the amount of ammonia that is adsorbed is able to be increased, and ammonia is also able to be sufficiently adsorbed in the exhaust gas downstream-side region in the SCR catalyst 41.

Also, as the exhaust gas flow rate increasing process, the opening amount of the nozzle vane 11v of the turbocharger 11 is decrease-corrected. More specifically, the opening amount of the nozzle vane 11v that is changed according to the engine load is forcibly set to the minimum opening amount. When the opening amount of the nozzle vane 11v is decrease-corrected in this way, the flow velocity of the exhaust gas that strikes the exhaust gas-side turbine of the turbocharger 11 increases, and as a result, the rotation speed of the exhaust gas-side turbine increases. When the rotation speed of the exhaust-side turbine increases, the rotation speed of the intake-side compressor of the turbocharger 11 also increases, so the amount of fresh air introduced into the combustion chamber increases. Therefore, the exhaust gas flow rate in the exhaust passage 26 is able to be increased. In other words, if the opening amount of the nozzle vane 11v is decrease-corrected when the air-fuel mixture is being combusted, it may end up affecting the engine operating state. However, because the air-fuel mixture is not being combusted when the opening amount of the nozzle vane 11v is decrease-corrected in this adsorption routine, the engine operating state will not be affected even if the opening amount of the nozzle vane 11v is decrease-corrected.

Also, if a large amount of urea aqueous solution is added when the exhaust gas flow rate EA is large, the urea aqueous solution that passes through and flows out of the SCR catalyst 41 will increase, so ammonia slip in which ammonia that is unable to be adsorbed to the SCR catalyst 41 flows out of the SCR catalyst 41 tends to occur. Regarding this, in the adsorption routine described above, when setting the urea addition amount QK in step S130, the urea addition amount QK is variably set according to the exhaust gas flow rate EA such that the urea addition amount QK is decreased when the exhaust gas flow rate EA is larger. Therefore, ammonia slip is inhibited from occurring even if the exhaust gas flow rate increasing process is performed.

As described above, the effects below are able to be obtained according to this example embodiment.
(1) An increasing process for increasing the exhaust gas flow rate is performed when adding urea aqueous solution when the engine 1 is decelerating. Therefore, ammonia is able to be sufficiently adsorbed even in the exhaust gas downstream-side region in the SCR catalyst 41, so the exhaust gas purification performance and the like, for example, is also able to be improved.

(2) The urea aqueous solution addition and the exhaust gas flow rate increasing process are performed when decelerating, particularly when the engine operating state in one in which the accelerator pedal 70 is not being operated. Therefore, the amount of ammonia that is adsorbed is able to be suitably increased, and ammonia is also able to be sufficiently adsorbed in the exhaust gas downstream-side region in the SCR catalyst 41.

(3) When the exhaust gas flow rate increasing process is performed, the opening amount of the nozzle vane 11v of the turbocharger 11 is decrease-corrected. More specifically, the opening amount of the nozzle vane 11v is set to the minimum opening amount. Accordingly, the exhaust gas flow rate inside the exhaust passage 26 is able to be increased.

(4) The urea addition amount QK when executing the exhaust gas flow rate increasing process is decreased when the exhaust gas flow rate EA is larger. If a large amount of reducing agent is added when the exhaust gas flow rate is large, ammonia slip in which ammonia that is unable to be adsorbed to the purifying catalyst flows out from the purifying catalyst tends to occur. Therefore, with this structure, the amount of reducing agent that is added is decreased when the exhaust gas flow rate is larger. Accordingly, ammonia slip is able to be inhibited from occurring when the exhaust gas flow rate increasing process is performed.

The example embodiment may also be carried out modified in the manner described below. In order to increase the exhaust gas flow rate, the opening amount of the nozzle vane 11v that is originally set according to the engine load is forcibly set to the minimum opening amount when decrease-correcting the opening of the nozzle vane 11v. Aside from this, an opening amount K1 of the nozzle vane 11v that is set when the engine 1 is decelerating and the urea aqueous solution is not being added, i.e., the opening amount K1 of the nozzle vane 11v corresponding to an engine load that corresponds to when the engine 1 is decelerating, may also be decrease-corrected such that the opening amount of the nozzle vane 11v when the engine 1 is decelerating and the urea aqueous solution is added becomes smaller than this opening amount K1.

In order to increase the exhaust gas flow rate, the opening amount of the nozzle vane 11v is adjusted, but the exhaust gas flow rate may also be increased by another method. For example, as shown in FIG. 4, the amount of fresh air introduced into the combustion chamber of the engine 1 increases, and consequently, the exhaust gas flow rate inside the exhaust passage 26 increases, as the opening amount of the intake throttle valve 16 increases. Therefore, when the opening amount of the intake throttle valve 16 is able to be increased when decelerating, the exhaust gas flow rate may be increased by increase-correcting the opening amount of the intake throttle valve 16. The exhaust gas flow rate may also be increased by supplying secondary air to the exhaust passage 26.

The urea aqueous solution addition and the exhaust gas flow rate increasing process are performed when decelerating, particularly when the engine operating state is one in which the accelerator pedal 70 is not being operated. Aside from this, the urea aqueous solution addition and the exhaust gas flow rate increasing process may also be performed when decelerating and the engine operating state is one in which the accelerator pedal 70 is being operated, i.e., when the engine 1 is decelerating while some air-fuel mixture is being combusted. When the engine 1 is decelerating in this way, the exhaust gas temperature is lower and the exhaust gas flow rate is also lower compared to when the engine 1 is accelerating or operating steadily, so the operation and effect described above resulting from performing the urea aqueous solution addition and exhaust gas flow rate increasing process is able to be obtained.

The urea addition amount QK is set variably, but it may also be a fixed value. For example, an amount of urea that is able to inhibit ammonia slip from occurring regardless of the exhaust gas flow rate may be set as a fixed value of the urea addition amount QK.

The arrangement and number of SCR catalyst 41 may be changed as appropriate. In particular, when a plurality of the SCR catalysts 41 are lined up in series in the exhaust gas flow direction, it tends to be difficult to sufficiently adsorb ammonia in the exhaust gas downstream-side region of the purifying catalyst as described above. Therefore, applying the invention to an exhaust gas control apparatus provided with such a plurality of SCR catalysts 41 is extremely effective.

In the example embodiment described above, the accelerator operating member that adjusts the engine output is the accelerator pedal 70, but it may also be another operating member. For example, the accelerator operating means may also be a lever or the like that is operated by hand. Urea aqueous solution is used as the reducing agent, but another reducing agent may also be used.

A catalyst that is different from the selective reduction NOx catalyst may also be used for the catalyst that purifies NOx.

## Claims

1. An exhaust gas control apparatus of an internal combustion engine (1) that includes an adding mechanism (200) that adds a reducing agent into an exhaust passage (26), and a purifying catalyst (41) that adsorbs the reducing agent added from the adding mechanism, **characterized in that** an increasing process that increases an exhaust gas flow rate is performed when the adding mechanism adds the reducing agent into the exhaust passage and the internal combustion engine is decelerating.

2. The exhaust gas control apparatus according to claim 1, **characterized in that** when the internal combustion engine is decelerating is when an engine operating state is one in which an accelerator operating means (70) is not being operated.

3. The exhaust gas control apparatus according to claim 1 or 2, **characterized in that** a variable capacity supercharger (11) that includes a nozzle vane (11v) is provided in the exhaust passage, and the increasing process is performed by decrease-correcting an opening amount of the nozzle vane.

4. The exhaust gas control apparatus according to claim 1 or 2, **characterized in that** a throttle valve (16) that regulates an intake air amount is provided in an intake passage of the internal combustion engine, and the increasing process is performed by increase-correcting an opening amount of the throttle valve.

5. The exhaust gas control apparatus according to claim 1 or 2, **characterized in that** the increasing process is performed by increasing the exhaust gas flow rate by supplying secondary air to the exhaust passage.

6. The exhaust gas control apparatus according to any one of claims 1 to 5, **characterized in that** an amount of the reducing agent that is added when the increasing process is executed is reduced as the exhaust gas flow rate becomes larger.
